# EUROPEAN PATENT APPLICATION

(11) **EP 3 340 161 A1**
(43) Date of publication of application: **27.06.2018**
(21) Application number: 16837108.6
(22) Date of filing: 16.08.2016
(51) Int. Cl.: G06Q 50/12, G07G 1/12, G07G 1/14

(54) **BUSINESS MANAGEMENT SYSTEM, CONTROL METHOD THEREFOR, AND COMPUTER PROGRAM**

(30) Priority: 17.08.2015 JP 2015160289
(71) Applicant: Recruit Holdings Co., Ltd., Tokyo 104-0061 (JP)
(72) Inventor: IHARA, Shingo, Tokyo 100-6640 (JP)
(74) Representative: EIP
(86) International application number: PCT/JP2016/073909
(87) International publication number: WO 2017/030119

(57) **Abstract**

A business management system according to the present disclosure includes: a server apparatus: and a register device placed in a restaurant shop. The register device transmits information on accounting of food and drink in the restaurant shop to the server apparatus through a network. From the information on accounting of food and drink and a profit ratio set for each food or drink menu, the server apparatus calculates a profit of each food or drink menu and a profit of the restaurant shop. In this manner, sales of each menu in the restaurant shop can be managed and analyzed, and by utilizing a result of the management and analysis, an operating profit can be increased.

## Description

### CROSS-REFERENCE TO RELATED APPLICATION

This application is based on Japanese Patent No. 2015-160289 filed on August 17, 2015, and the disclosure of which is hereby incorporated by reference.

### Technical Field

The present disclosure relates to a business management system, a control method therefor, and a computer program.

### Background Art

Conventionally, registers having a point of sale (POS) function (hereinafter referred to as "POS registers") have been widely used in retail stores and other places to read barcodes on products for accounting processes, for example, and thereby manage and analyze the sales and the inventory of each product. In known examples, systems using POS registers are also introduced to restaurant shops to summarize and record the sales of the restaurant shops, and for franchise shops, compare the sales of the shops in order to enhance efficiency of business management (see, for example, Patent Document 1 and Patent Documents listed in Patent Document 1).

### Citation List

### Patent Document

Patent Document 1: Japanese Patent Unexamined Publication No. 2013-137657

### Summary

Especially in restaurant shops, however, there have been no attempts to manage and analyze sales of each food or drink menu or to perform business management by utilizing results of such management and analysis. The present disclosure has been made in view of the foregoing circumstances, and has an object of providing a business management system, a control method therefor, and a computer program capable of managing and analyzing sales of each food or drink menu in a restaurant shop and utilizing results of the management and analysis in order to aid an increase in an operating profit.

A business management system according to an aspect of the present disclosure includes: a server apparatus; and a register device placed in a restaurant shop. The register device transmits information on accounting (process) of food and drink in the restaurant shop to the server apparatus through a network. From the information on accounting of food and drink and a profit ratio set for each of food or drink menus, the server apparatus calculates a profit of each of the food or drink menus and a profit (e.g., operating profit) of the restaurant shop.

The server apparatus may summarize profits of the food or drink menus in association with a word included (used) in a name of each of the food or drink menus. In this case, the server apparatus may perform a morphological analysis or a natural language analysis using the morphological analysis, for example, on a character string of the name of a food or drink menu transmitted from the register device to extract a plurality of words from the name of the food or drink menu.

In addition, the server apparatus may classify the food or drink menus into menu groups each belonging to an identical or substantially identical type, based on first words that are common, have identical or substantially identical meaning, or have an identical or substantially identical concept, and are included (used) in the food or drink menus, and the server apparatus may extract or select information on a food material making a relatively high contribution to each of the menu groups, from second words used in combination with the first words and the profit of each of the food or drink menus.

In this case, the server apparatus may transmit, to the register device and/or another information terminal device, the extracted or selected information (feedback information) on the food material and/or information on a recommended food or drink menu using the food material, and the register device and/or the another information terminal device may display the information on the food material and/or the recommended food or drink menu.

The register device may transmit information on an environment of the accounting of food and drink to the server apparatus, and the server apparatus may manage the profit of each of the food or drink menus in association with the information on the environment.

Moreover, the register device may transmit information on a visitor who eats and drinks to the server apparatus, and the server apparatus may manage the profit of each of the food or drink menus in association with the information on the visitor who eats and drinks.

A control method for a business management system according to an aspect of the present disclosure is a control method for a business management system according to the present disclosure including a server apparatus and a register device placed in a restaurant shop, and includes: transmitting information on accounting of food and drink in the restaurant shop from the register device to the server apparatus through a network; and causing the server apparatus to calculate, from the information on accounting of food and drink and a profit ratio set for each of food or drink menus, a profit of each of the food or drink menus and a profit of the restaurant shop.

A computer program for business management according to an aspect of the present disclosure causes a computer to function as a server apparatus and a register device placed in a restaurant shop, and the computer program causes the register device to transmit information on accounting of food and drink in the restaurant shop to the server apparatus through a network, and causes the server apparatus to calculate, from the information on accounting of food and drink and a profit ratio set for each of food or drink menus, a profit of each of the food or drink menus and a profit of the restaurant shop.

### Advantageous Effects of Invention

According to the present disclosure, based on the information on accounting of food and drink in the restaurant shop transmitted from the register device and the profit ratio of each of the food or drink menus, the profit of each of the food or drink menus and the profit of each restaurant shop are calculated. Thus, a food or drink menu making high contribution to the profit of the restaurant shop, that is, a food or drink menu that is not only a so-called well-sold but also has high profitability, can be grasped. In this manner, sales strategies of increasing the amount of service of the food or drink menu with high profitability relative to other food or drink menus with low profitability and recommending this food or drink menu to visitors who eat and drink can be employed. As a result, an operating profit can be increased.

In addition, by utilizing information on the accounting of food and drink (e.g., sales data) in a plurality of restaurant shops, the tendency of food or drink menus that are highly demanded not only in individual shops but also in restaurant industry can be grasped. Thus, effective sales strategies with high accuracy can be employed, and the operating profit can be further increased.

### Brief Description of Drawings

Fig. 1 is a system block diagram schematically illustrating a preferred embodiment of a network architecture in a business management system according to the present disclosure.
Fig. 2 is a system block diagram schematically illustrating an example of an architecture of a server apparatus in the business management system according to the present disclosure.
Fig. 3 is a system block diagram schematically illustrating an example of an architecture of a register device in the business management system according to the present disclosure.
Fig. 4 is a system block diagram schematically illustrating an example of an architecture of a user terminal in the business management system according to the present disclosure.
Fig. 5 is a flowchart showing an example of a flow (part) of a process in the business management system according to the present disclosure.
Fig. 6 is a plan view illustrating an example of a screen displayed on a display device of the register device or the user terminal.

### Description of Embodiments

An embodiment of the present disclosure will be described in detail. The following description is an example for describing the present disclosure, and is not intended to limit the present disclosure only to the embodiment. The present disclosure may be variously modified without departing from the gist of the disclosure. Those skilled in the art would be able to employ embodiments in which components described below are replaced by equivalent components, and such embodiments are included in the range of the disclosure. In addition, positional relationships, such as top, bottom, left, and right, that are used when necessary will be based on the illustrations shown in the drawings without otherwise specified. Various dimensional proportions in the drawings are not limited to the illustrated proportions.

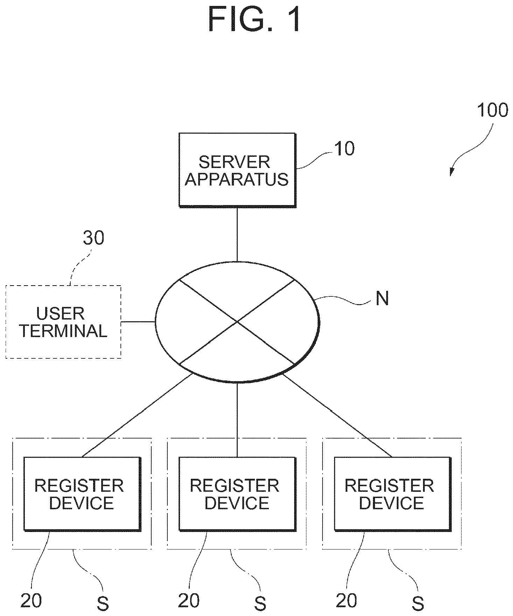

Fig. 1 is a system block diagram schematically illustrating a preferred embodiment of a network architecture in a business management system according to the present disclosure. A business management system 100 includes a single or a plurality of register devices 20 (register devices) that are respectively disposed in a plurality of restaurant shops S and a server apparatus 10 connected to the register devices 20 through a network N.

The server apparatus 10 is a network node including a part of the function of the business management system 100, is configured by, for example, a host computer having a high processing capacity, and exerts a server function by operation of a predetermined server program in the host computer. In this embodiment, the server apparatus 10 is a device that stores information on accounting of food and drink transmitted from the register devices 20 placed in a plurality of restaurant shops S (e.g., sales data of each food or drink menu) and a profit ratio of each food or drink menu set in the server apparatus 10 and /or the register devices 20, for example, and from the information and the profit ratio, calculates a profit of each food or drink menu and a profit (operating profit) of each restaurant shop S. The server apparatus 10 transmits feedback information (e.g., recommended food or drink menu described later) through the network N to, for example, the register devices 20 and/or a user terminal 30 (another information terminal device) carried by a manager of a restaurant shop S or an employee in charge of the register.

The network N is a communication network including a mixture of a wired network (e.g., local area network (LAN), wide area network (WAN), or value-added network (VAN)) and a wireless network (e.g., mobile radio communication network, satellite communication network, Bluetooth (registered trademark), wireless fidelity (Wi-Fi), or high speed downlink packet access (HSDPA)).

On the other hand, the register devices 20 are devices (including devices, equipment, terminals, and systems) having register functions, and are not limited to a specific configuration. More specific examples include a POS register (including not only a register integrally provided with a POS function but also a register system including a device having a POS function and a register device), a device in which application software for implementing a POS function is installed, and a device for executing application software for implementing a POS function stored in a cloud or a system having a POS function provided on the web. In this embodiment, as a further specific example, each of the register devices 20 is assumed to be a portable information terminal device in which POS application software is installed in a tablet terminal (including a cellular phone typified by a smartphone) that employs a user interface such as a touch panel and a display having high visual recognizability and that has the function of communicating with the network N (where the device can be regarded as a network node in this respect).

On the other hand, the user terminal 30, which is not necessary in the business management system 100 according to the present disclosure, is one of network nodes for receiving feedback information transmitted from the server apparatus 10 and is constituted by, for example, a general-purpose terminal device used by a user (e.g., a manager of a restaurant shop S or an employee in charge of a register). More specifically, the user terminal 30 is a tablet terminal similar to the register devices 20, and information browsing application software for browsing information received from the server apparatus 10 and, as necessary, a POS application also installed in the register devices 20 and tutorial software for operating a register may be installed in the user terminal 30.

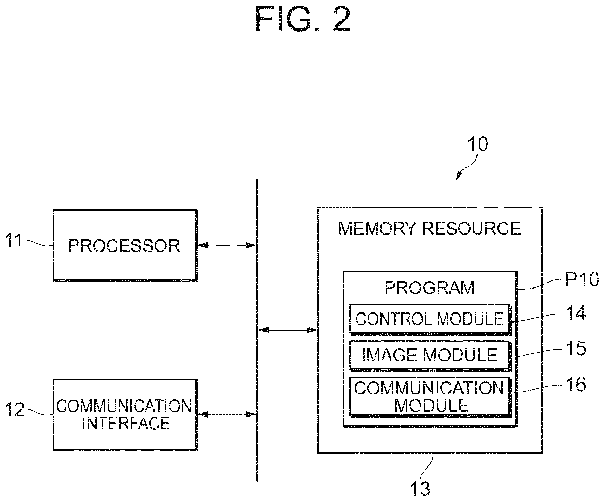

Fig. 2 is a system block diagram schematically illustrating an example of a configuration of the server apparatus 10. As illustrated in FIG. 2, the server apparatus 10 includes a processor 11, a communication interface 12, and a memory resource 13.

The processor 11 is constituted by an arithmetic and logic unit that performs an arithmetic operation, a logical operation, a bit operation, and other operations, and various registers (e.g., a program counter, a data register, an instruction register, and a general-purpose register; different from the register devices 20), interprets and executes a program P10 stored in the memory resource 13, and outputs a predetermined processing result.

The communication interface 12 is a hardware module for connection to the register devices 20 and/or the user terminals 30 through the network N, and is a modulator/demodulator such as an ISDN modem, an ADSL modem, a cable modem, an optical modem, or a soft modem.

The memory resource 13 is, for example, a logical device provided in a storage region of a physical device (e.g., a computer-readable storage medium such as a disk drive or a semiconductor memory). In this case, a plurality of physical devices may be mapped to one logical device, or one physical device may be mapped to a plurality of logical devices. In addition, the memory resource 13 may store logs of an information transmission history from each register device 20 and an access history of the user terminal 30, for example.

The program P10 is a program for performing a series of information processing (e.g., classification, processing, analysis, and mathematical analysis) using various types of information transmitted from the plurality of register devices 20, and includes a plurality of software modules that are called to be executed as appropriate while a main program in the server apparatus 10 (e.g., the server program described above) is being operated. Each of the software modules is a sub-program modularized in order to execute a specific processing, and is created by using a procedure, a subroutine, a method, a function, a data structure, and so forth. The "module" refers to a unit that can be compiled in itself (but is not limited to this unit).

More specifically, the program P10 includes a control module 14 that performs various types of control processing on information acquired from the register devices 20, an image module 15 that generates an image for displaying feedback information on the register devices 20 and/or the user terminal 30 and performs display processing of the image, based on processing results of the control module 14, and a communication module 16 that performs a communication process with the network N or other processes through the communication interface 12. The memory resource 13 may store computation parameters such as a parameter necessary when the control module 14 performs various types of control processing and a parameter necessary when the image module 15 performs layout and screen scale operations in generating or displaying an image.

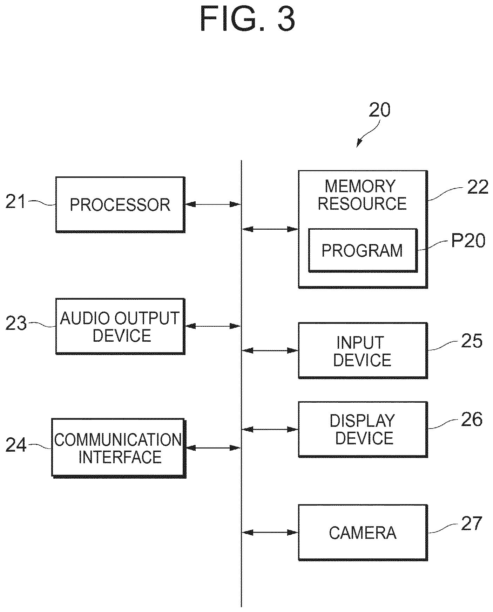

Fig. 3 is a system block diagram schematically illustrating an example of an architecture of the register device 20. As described above, the register device 20 according to this embodiment is a portable information terminal device in which POS application software is installed in a tablet terminal, and includes a processor 21, a memory resource 22, an audio output device 23, a communication interface 24, an input device 25, a display device 26, and a camera 27.

The processor 21 is constituted by an arithmetic and logic unit and various registers (e.g., a program counter, a data register, an instruction register, and a general-purpose register; different from the register device 20). The processor 21 interprets and executes POS application software that is a program P20 stored in the memory resource 22, performs an accounting process and other processes in a restaurant shop S in accordance with operation information input to the input device 25, and transmits the operation information together with other types of information to the server apparatus 10 through the network The processor 21 receives information transmitted from the server apparatus 10 and causes a display device 26 to display various types of text data and image data.

The POS application software can be distributed from, for example, the server apparatus 10 through the network N, and may be installed in the register device 20 before the register device 20 is delivered or lent to the restaurant shop S, or may be installed and updated automatically or by a manager or an employee, for example, of the restaurant shop S after the register device 20 has been delivered or lent.

The memory resource 22 is a logical device provided in a storage region of a physical device (e.g., a computer-readable storage medium such as a disk drive or a semiconductor memory), and stores an operating system program for use in processing by the register device 20, a driver program, and various types of data. Examples of the driver program include an input device driver program for controlling the input device 25 and an output device driver program for controlling the audio output device 23 and the display device 26.

The audio output device 23 is, for example, a sound player that can reproduce general sound data.

The communication interface 24 is used for providing an interface for connection with the server apparatus 10, and is constituted by a wireless communication interface and/or a wired communication interface.

The input device 25 is used for providing an interface for accepting a register input operation, and can be exemplified by, for example, a touch panel, a keyboard, a mouse, and an information code reader.

The display device 26 is used for providing an image display interface for register operation and an image display interface for browsing information stored in the register device 20 to a user (e.g., a manager of the restaurant shop S or an employee in charge of the register), and can be, for example, an organic EL display, a liquid crystal display, or a CRT display.

The camera 27 is used for capturing an image of an information code associated with a food or drink menu or a still image of the menu itself, for example.

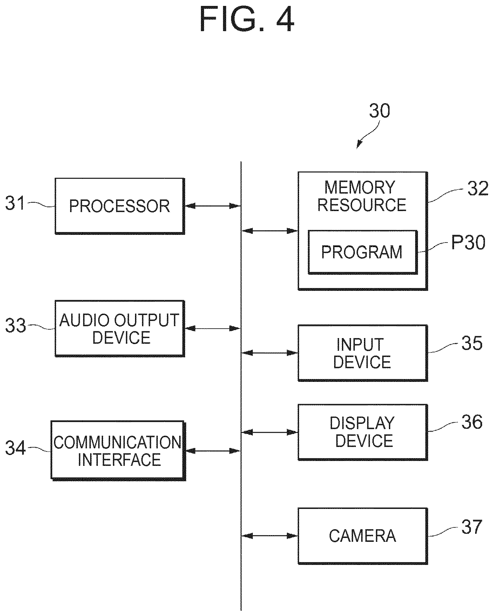

Fig. 4 is a system block diagram schematically illustrating an example of an architecture of the user terminal 30. As described above, in this embodiment, the user terminal 30 is a tablet terminal similar to the register device 20, and has a system structure (physical structure) similar to that of the register device 20. Specifically, the user terminal 30 includes a processor 31, a memory resource 32, an audio output device 33, a communication interface 34, an input device 35, a display device 36, and a camera 37.

The processor 31 is configured similarly to the processor 21, receives information transmitted from the server apparatus 10, interprets and executes information browsing application software that is a program P30 stored in the memory resource 32, and causes the display device 36 to display various types of text data and image data.

The memory resource 32 is configured similarly to the memory resource 22, and stores an operating system program, a driver program, various types of data, and so forth for use in processing of the user terminal 30. Examples of the driver program include an input device driver program for controlling the input device 35 and an output device driver program for controlling the audio output device 33 and the display device 36.

Similarly to the audio output device 23, the audio output device 33 is, for example, a sound player that can reproduce general sound data.

Similarly to the communication interface 24, the communication interface 34 provides an interface for connection with the server apparatus 10, and is constituted by a wireless communication interface or a wired communication interface.

The input device 35 is used for providing an interface for accepting an input operation for access to information stored in the user terminal 30, and can be exemplified by, for example, a touch panel, a keyboard, and a mouse.

The display device 36 is used for providing an image display interface for browsing information stored in the user terminal 30 to a user (e.g., a manager of the restaurant shop S or an employee in charge of the register), and can be, for example, an organic EL display, a liquid crystal display, or a CRT display. Similarly to the camera 27, the camera 37 is used for capturing an image of an information code associated with a food or drink menu or a still image of the menu itself, for example, as necessary.

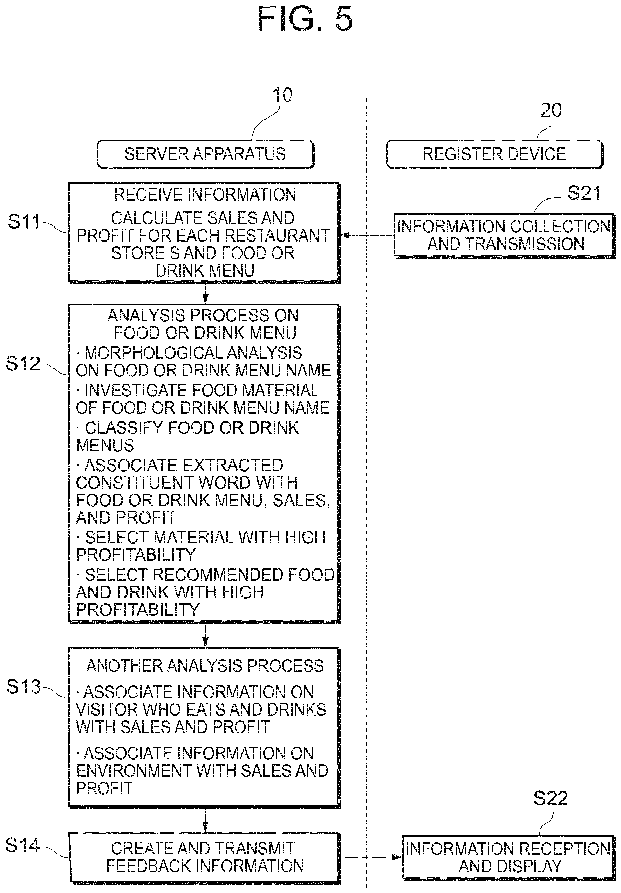

As a basic operation of the thus-configured business management system 100, various types of information from the register devices 20 placed in the respective restaurant shops S are automatically transmitted to the server apparatus 10 through the network N. The server apparatus 10 stores these types of information and performs an analysis and processing on the information as appropriate, and transmits resulting feedback information to the register devices 20 and/or the user terminal 30 through the network N. More specifically, this process can be exemplified by Fig. 5 and the following procedure.

Fig. 5 is a flowchart showing an example of a flow (part) of a process in the business management system 100. Here, first, a person in charge of a register in a restaurant shop S actuates the register device 20, and starts the program P20 (POS application software) in the processor 21 of the register device 20. In this state, when the person in charge of the register operates the input device 25 of the register device 20 to perform an accounting process of food and drink, the processor 21 collects information obtained by the register process and other additional information, and transmits the information to the server apparatus 10 by using the communication interface 24 (step S21).

Examples of the information described above include information on accounting of food and drink (e.g., names of food or drink menus, a unit price of each food or drink menu, a sales quantity of each food or drink menu, and a profit ratio of each food or drink menu), information on visitors who eat and drink (e.g., a seat such as a table number served with food or drink menus and the number and sexes of the visitors who eat and drink), information on the restaurant shop S (e.g., the name of the restaurant, the name of the restaurant shop, an address, a register ID number, and the name of the person in charge of the register), information on the time of day and time (e.g., a shop entrance time, a payment time, a staying time in which a visitor who eats and drinks stays), and information on environments (e.g., weather and temperature).

The server apparatus 10 receives the information described above by using the communication interface 12 and stores the information in the memory resource 13. Thereafter, the processor 11 of the server apparatus 10 calls the control module 14 of the program P10, and performs an information analysis and processing described later, for example.

### <Calculation of sales and profit for each restaurant shop and each food or drink menu>

First, the processor 11 of the server apparatus 10 calculates the sales and profit of each restaurant shop S from information on accounting of food and drink in the restaurant shop S (e.g., names of food or drink menus, a unit price of each food or drink menu, a sales quantity of each food or drink menu, and a profit ratio of each food or drink menu) (step S11).

For example, Table 1 shows an example (which is limited to pasta menus in this case) of sales data on each food or drink menu in a predetermined period (e.g., the last one or two weeks) summarized based on information transmitted from the register devices 20 to the server apparatus 10, for a certain restaurant shop S (individual shop) serving pasta menus. Note that sales = sales quantity × unit price and that profit = sales × profit ratio. Based on aggregate data concerning the single restaurant shop S (individual shop), the processor 11 determines that latest well-sold menus in this restaurant shop S are "vongole bianco," "pasta with eggplant and tomato sauce," "pasta with salted apricot and perilla herb," and "cold pasta with tomato and uncured ham," and these well-sold menus highly contribute to the profit of the restaurant shop S, and causes the memory resource 13 to store the resulting information.

**[Table 1]**

| Name of food or drink menu | Sales quantity | Unit price | Profit ratio | Sales | Profit | Contribution to total profit |
|---|---|---|---|---|---|---|
| aglio olio e peperoncino | 11 | ¥1,300 | 0.11 | ¥14,300 | ¥1,573 | 1.6% |
| vongole bianco | 24 | ¥1,500 | 0.25 | ¥36,000 | ¥9,000 | 9.3% |
| genovese | 8 | ¥1,100 | 0.36 | ¥8,800 | ¥3,168 | 3.3% |
| pasta with squid and zucchini | 20 | ¥1,300 | 0.14 | ¥26,000 | ¥3,640 | 3.8% |
| bolognese | 15 | ¥1,200 | 0.18 | ¥18,000 | ¥3,240 | 3.4% |
| napolitan | 2 | ¥950 | 0.4 | ¥1,900 | ¥760 | 0.8% |
| pescatore | 13 | ¥1,200 | 0.22 | ¥15,600 | ¥3,432 | 3.6% |
| arrabiata | 22 | ¥1,200 | 0.2 | ¥26,400 | ¥5,280 | 5.5% |
| vongole rosso | 19 | ¥1,300 | 0.17 | ¥24,700 | ¥4,199 | 4.4% |
| puttanesca | 2 | ¥1,400 | 0.15 | ¥2,800 | ¥420 | 0.4% |
| tomato sauce pasta with eggplant | 32 | ¥1,250 | 0.2 | ¥40,000 | ¥8,000 | 8.3% |
| carbonara | 18 | ¥1,150 | 0.16 | ¥20,700 | ¥3,312 | 3.4% |
| alfredo | 14 | ¥1,350 | 0.22 | ¥18,900 | ¥4,158 | 4.3% |
| salmon cream pasta | 17 | ¥1,200 | 0.28 | ¥20,400 | ¥5,712 | 5.9% |
| tomato cream pasta | 15 | ¥1,100 | 0.31 | ¥16,500 | ¥5,115 | 5.3% |
| seasoned cod roe spaghetti | 41 | ¥1,300 | 0.16 | ¥53,300 | ¥8,528 | 8.8% |
| Japanese style spaghetti with mushroom | 2 | ¥1,250 | 0.15 | ¥2,500 | ¥375 | 0.4% |
| pasta with salted apricot and perilla herb | 35 | ¥1,200 | 0.2 | ¥42,000 | ¥8,400 | 8.7% |
| cold pasta with tomato and uncured ham | 36 | ¥1,500 | 0.17 | ¥54,000 | ¥9,180 | 9.5% |
| consomme pasta | 10 | ¥1,000 | 0.36 | ¥10,000 | ¥3,600 | 3.7% |
| curry pasta | 5 | ¥1,100 | 0.33 | ¥5,500 | ¥1,815 | 1.9% |
| pasta with corned beef and cabbage | 10 | ¥1,200 | 0.29 | ¥12,000 | ¥3,480 | 3.6% |
| Total | | | | ¥470,300 | ¥96,387 | 100.0% |

### <Analysis process on food or drink menu>

Next, the processor 11 of the server apparatus 10 performs an analysis process concerning food or drink menus based on information on accounting on a plurality of restaurant shops S (step S12).

For example, Table 2 shows an example of sales data of each food or drink menu in a predetermined period (e.g., the last one or two weeks) summarized based on information transmitted from the register devices 20 to the server apparatus 10 in a plurality of restaurant shops S serving pasta menus. Although the names of food or drink menus (the names of pasta menus) are assumed to differ among the restaurant shops S even for the same or similar pasta menus, Table 2 virtually shows the united names of food or drink menus.

**[Table 2]**

| Name of food or drink menu | Sales quantity | Unit price | Profit ratio | Sales | Profit | Contribution to total profit |
|---|---|---|---|---|---|---|
| aglio olio e peperoncino | 211 | ¥1,300 | 0.11 | ¥274,300 | ¥30,173 | 0.8% |
| vongole bianco | 193 | ¥1,500 | 0.25 | ¥289,500 | ¥72,375 | 2.0% |
| genovese | 150 | ¥1,100 | 0.36 | ¥165,000 | ¥59,400 | 1.6% |
| pasta with squid and zucchini | 865 | ¥1,300 | 0.14 | ¥1,124,500 | ¥157,430 | 4.4% |
| bolognese | 782 | ¥1,200 | 0.18 | ¥938,400 | ¥168,912 | 4.7% |
| napolitan | 234 | ¥950 | 0.4 | ¥222,300 | ¥88,920 | 2.5% |
| pescatore | 401 | ¥1,200 | 0.22 | ¥481,200 | ¥105,864 | 2.9% |
| arrabiata | 378 | ¥1,200 | 0.2 | ¥453,600 | ¥90,720 | 2.5% |
| vongole rosso | 258 | ¥1,300 | 0.17 | ¥335,400 | ¥57,018 | 1.6% |
| puttanesca | 270 | ¥1,400 | 0.15 | ¥378,000 | ¥56,700 | 1.6% |
| tomato sauce pasta with eggplant | 881 | ¥1,250 | 0.2 | ¥1,101,250 | ¥220,250 | 6.1% |
| carbonara | 1392 | ¥1,150 | 0.16 | ¥1,600,800 | ¥256,128 | 7.1% |
| alfredo | 506 | ¥1,350 | 0.22 | ¥683,100 | ¥150,282 | 4.2% |
| salmon cream pasta | 2057 | ¥1,200 | 0.28 | ¥2,468,400 | ¥691,152 | 19.1% |
| tomato cream pasta | 1845 | ¥1,100 | 0.31 | ¥2,029,500 | ¥629,145 | 17.4% |
| seasoned cod roe spaghetti | 1010 | ¥1,300 | 0.16 | ¥1,313,000 | ¥210,080 | 5.8% |
| Japanese style spaghetti with mushroom | 739 | ¥1,250 | 0.15 | ¥923,750 | ¥138,563 | 3.8% |
| pasta with salted apricot and perilla herb | 505 | ¥1,200 | 0.2 | ¥606,000 | ¥121,200 | 3.4% |
| cold pasta with tomato and uncured ham | 337 | ¥1,500 | 0.17 | ¥505,500 | ¥85,935 | 2.4% |
| consomme pasta | 306 | ¥1,000 | 0.36 | ¥306,000 | ¥110,160 | 3.0% |
| curry pasta | 94 | ¥1,100 | 0.33 | ¥103,400 | ¥34,122 | 0.9% |
| pasta with corned beef and cabbage | 235 | ¥1,200 | 0 29 | ¥282,000 | ¥81,780 | 2.3% |
| Total | | | | ¥16,584,900 | ¥3,616,309 | 100.0% |

The processor 11 of the server apparatus 10 creates aggregate data concerning the plurality of restaurant shops S, and performs a morphological analysis in, for example, a Japanese natural language process on each name of food or drink menu to thereby perform a logical computation process that classifies a character string of the name of each food or drink menu into a plurality of constituent words. For example, by performing a morphological analysis on "pasta with squid and zucchini," "squid," "zucchini," and "pasta" are obtained as constituent words. In a morphological analysis on "salmon cream pasta," "salmon," "cream," and "pasta" are obtained as constituent words. In a morphological analysis on "tomato cream pasta," the words of "tomato," "cream," and "pasta" are obtained as constituent words.

In addition, the processor 11 performs a search to determine whether or not the constituent words obtained as described above correspond to a food material or not by using a search system (e.g., a portal site having a search engine or a search function or a portal site having a dictionary function) or the like. Consequently, if it is determined that these constituent words represent food materials, these constituent words (food materials such as "pasta," "squid," "zucchini," "salmon," "tomato," and "cream") are stored in the memory resource 13 in association with original food or drink menus and sales and profits thereof, in accordance with an instruction of the processor 11.

On the other hand, there are also menus in which food materials used are not specifically indicated in character strings of the names of food or drink menus, such as "vongole bianco," "pescatore," and "napolitan." A morphological analysis is performed on these names of food or drink menus, these names are classified into constituent words of "vongole," "bianco," "pescatore," and "napolitan." The constituent words are given to the search system described above, and if it is determined that these words do not represent food materials, the processor 11 searches for food materials used in "vongole bianco," "pescatore," and "napolitan" by using a search system. For example, for "vongole bianco," main materials are "white wine," "clam," and "pasta." For "pescatore," main materials are "seafood," "tomato source," and "pasta." For "napolitan," main materials are "bacon," "onion," "bell pepper," "tomato ketchup," and "spaghetti."

In accordance with an instruction of the processor 11, words representing these food materials are associated with original food or drink menus, sales and profits thereof as constituent words of the food or drink menus, and are stored in the memory resource 13.

The processor 11 of the server apparatus 10 classifies these food or drink menus. For example, from the constituent words of "pasta" and "spaghetti" obtained through the classification by the morphological analysis (corresponding to "first words that are common words used in the names of food or drink menus"), the food or drink menus shown in Table 2 are classified as menus belonging to "pasta group" (a group of identical or substantially identical menus) as a major concept. In this manner, some of the constituent words obtained through the classification by the morphological analysis except for "pasta" and "spaghetti" correspond to "second words used in combination with the first words."

Furthermore, the processor 11 of the server apparatus 10 can classify each food or drink menu in further detail. In this case, in a manner similar to the search for food materials of the food or drink menus by using the search system, the further detailed classification can be performed by investigating the content of each food or drink menu. As an example, in a case where the "pasta group" is classified into conventional groups such as "oil-based pasta," "tomato-based pasta," "cream-based pasta," "Japanese style pasta," and "other pasta," the pasta menus shown in Table 2 can be classified as follows:
(Oil-based pasta)
   aglio olio e peperoncino, vongole bianco, genovese, and pasta with squid and zucchini
(Tomato-based pasta)
   bolognese, napolitan, pescatore, arrabiata, vongole rosso, puttanesca, and pasta with eggplant and tomato sauce
(Cream-based pasta)
   carbonara, alfredo, salmon cream pasta, and tomato cream pasta
(Japanese style pasta)
   seasoned cod roe spaghetti, Japanese style spaghetti with mushroom, and pasta with salted apricot and perilla herb
(Other pasta)
   cold pasta with tomato and uncured ham, consommé pasta, curry pasta, and pasta with corned beef and cabbage

Next, based on data obtained by an analysis process of information on accounting of food and drink in the plurality of restaurant shops S, the processor 11 of the server apparatus 10 selects food materials with high profitability and a recommended food or drink menu with high profitability.

That is, based on the sales quantities, unit prices, and profit ratios of aggregate data shown in Table 2, the processor 11 determines that "salmon cream pasta" and "tomato cream pasta" have been well sold recently and shows a tendency of relatively high profitability among the pasta group in food or drink menus listed in Table 2. In addition, the processor 11 determines that food materials superior in increasing profitability are "salmon," "tomato," and "cream" from constituent words associated with the food or drink menus, and "cream pasta using salmon or tomato" can be selected as a recommended food or drink menu with high profitability.

In this case, it is also possible to refer to sales and profits of pasta menus similar to "cream pasta," "pasta using salmon," and "pasta using tomato." For example, in the example shown in Table 2, for "pasta using cream," if there are a plurality of menus with high sales and high profits in other "cream-based pasta" menus, it can be recommended to serve "cream-based pasta" as a sub-category. Similarly, for "pasta using tomato," sales and profits of other "tomato-based pasta" menus are referred to. For "pasta using salmon," if there is another pasta menu including salmon as a food material, the sales and profits thereof can be referred to.

In addition, the processor 11 of the server apparatus 10 may calculate sales quantities, sales proceeds, and profits expected in the case of serving "cream pasta using tomato or salmon," based on the sales and profits of "salmon cream pasta" and "tomato cream pasta" shown in Table 2, proportions (actual data) of "salmon cream pasta" and "tomato cream pasta" in the sales quantity of the entire pasta group, and sales quantities of the pasta groups in the restaurant shops S.

### <Another analysis process: step S13>

Furthermore, in addition to accounting of food and drink in the restaurant shops S, the processor 11 of the server apparatus 10 performs another analysis process based on other information (step S13).

Table 3 shows an example of results an additional analysis process using aggregate data targeted to the plurality of restaurant shops S listed in Table 2, information on visitors who eat and drink and information concerning environments transmitted from the register devices 20 to the server apparatus 10. That is, Table 3 shows a result obtained by extracting (arrangement of) a seat served with each food or drink menu, and weather and temperature at the time of this service showing the highest frequency of accounting processes of the food or drink menu in the plurality of restaurant shops S. In this example, the "seats" in each restaurant shop S are classified stepwise into five areas (zones) (e.g., Z1: indoor window side, Z2: indoor aisle side, Z3: indoor center part, Z4: counter, and Z5: terrace), and the "temperature" is classified stepwise by every 5°C.

**[Table 3]**

| Name of food or drink menu | Seat | Weather | Temperature |
|---|---|---|---|
| aglio olio e peperoncino | Z1 | sunny | 20-25°C |
| vongole bianco | Z2 | cloudy | 20-30°C |
| genovese | Z3 | cloudy | 25-30°C |
| pasta with squid and zucchini | Z1 | rain | 20-25°C |
| bolognese | Z3 | sunny | 20-25°C |
| napolitan | Z2 | sunny | 20-25°C |
| pescatore | Z1 | rain | 10-15°C |
| arrabiata | Z4 | rain | 15-20°C |
| vongole rosso | Z5 | sunny | 20-25°C |
| puttanesca | Z1 | rain | 15-20°C |
| tomato sauce pasta with eggplant | Z2 | cloudy | 20-25°C |
| carbonara | Z2 | cloudy | 15-20°C |
| Alfredo | Z1 | cloudy | 25-30°C |
| salmon cream pasta | Z3 | rain | 15-20°C |
| tomato cream pasta | Z3 | rain | 15-20°C |
| seasoned cod roe spaghetti | Z2 | sunny | 20-25°C |
| Japanese style spaghetti with mushroom | Z2 | rain | 25-30°C |
| pasta with salted apricot and perilla herb | Z1 | cloudy | 25-30°C |
| cold pasta with tomato and uncured ham | Z4 | sunny | 30-35°C |
| consomme pasta | Z3 | sunny | 20-25°C |
| curry pasta | Z2 | sunny | 15-20°C |
| pasta with corned beef and cabbage | Z1 | cloudy | 10-25°C |

For example, from these results, it is understood that "salmon cream pasta" and "tomato cream pasta" determined to be well sold and have high profitability are relatively frequently ordered by visitors who eat and drink sitting on seats in Z3 (indoor center part), and both are relatively frequently ordered in rainy days at temperatures from 15 to 20°C. The same holds for the other food or drink menus.

Based the thus-obtained analysis result, the processor 11 of the server apparatus 10 associates information on visitors who eat and drink with sales and profits of food or drink menus (extracts seats expected to have an increase in sales of food or drink menus (sales opportunity)), and associates information on environments with sales and profits of the food or drink menus (extract weathers and temperature ranges with which sales (sales opportunities) of food or drink menus are expected to increase). These sets of information are stored in the memory resource 13 in accordance with an instruction of the processor 11.

### <Creation and transmission of feedback information>

Next, the processor 11 of the server apparatus 10 creates feedback information to the restaurant shops S by using results obtained by the analysis processing described above, and transmits the feedback information to the register devices 20 and the user terminal 30 (step S14). Specifically, the processor 11 calls appropriate data (e.g., in the above example, food materials with high profitability, recommended food or drink menus, food or drink menus, and seats, weathers, and temperatures with increase in sales of the food or drink menus) among items of data (data structures) associated with food or drink menus stored in the memory resource 13, and creates text data in a format to be displayed on the register devices 20 or the user terminal 30 by using the image module 15 (where texts are treated as images).

In this process, the processor 11 may cause text data and image data to include recipes and arrangement examples of a recommended food or drink menus (that may be obtained by searching the web with a search system or the like or previously creating a data base of a plurality of recipes and the like of food or drink menus of the pasta group). The processor 11 converts the text data and the image data to communication data by using the communication module 16, and transmits the communication data to the register devices 20 and the user terminal 30 by using the communication interface 12.

On the other hand, the register devices 20 and/or the user terminal 30 that has received the communication data by using the communication interface 24, 34 causes the memory resource 32 to store the feedback information from the server apparatus 10. The processor 21 , 31 reconstructs text data and image data for displaying the feedback information and, by using the text data and image data, causes the display device 26, 36 to display the feedback information (step S22). In Fig. 4, reception and display processes of the feedback information in the user terminal 30 are not shown.

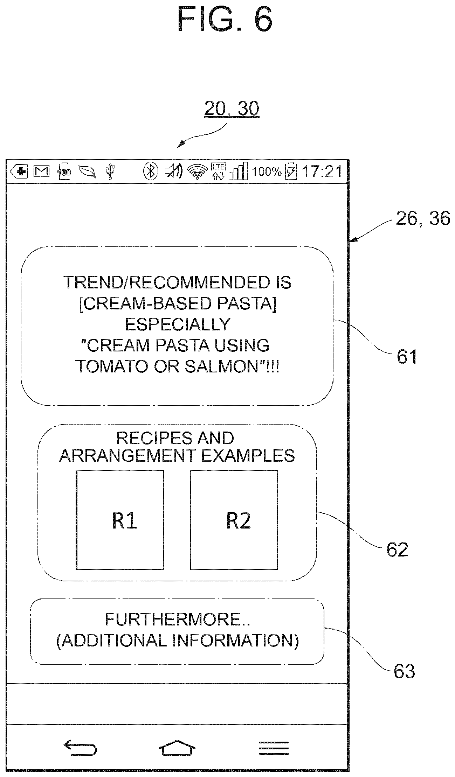

Fig. 6 is a plan view illustrating an example of a screen displayed on the display devices 26 and 36 of the register devices 20 and the user terminal 30. In this example, a recommended food or drink menu 61 and additional information 62 and 63 are displayed on the display devices 26 and 36 as feedback information.

The recommended food or drink menu 61 displayed in an upper stage of the screen is, for example, a text display indicating that the recommended food or drink menu is "cream-based pasta," and "cream pasta using tomato or salmon" is especially recommended in the group. The additional information 62 displayed in an intermediate stage of the screen is, for example, a display of a text and illustration image or a photograph image showing a recipe or an example of arrangement of "cream pasta using tomato or salmon." The additional information 63 displayed in a lower stage of the screen is, for example, a text display indicating sales quantities, sales proceeds, and profits expected in the case of providing "cream pasta using tomato or salmon" and seats, weathers, temperature ranges, and others with expectancies of increase in sales proceeds of food or drink menus.

With the thus-configured business management system 100, a control method for the system, and a computer program for business management, as shown in Table 1, a profit of each food or drink menu in each restaurant shop S and a profit of the restaurant shop S can be calculated based on information in accounting of food and drink in restaurant shops S transmitted from the register devices 20 and a profit ratio of each food or drink menu. In this manner, a food or drink menu highly contributing to the profit of each restaurant shop S (e.g., in the example of the restaurant shop S in Table 1, "vongole bianco" and "cold pasta with tomato and ham" as food or drink menus that are well sold and have high profitability) can be specified and grasped. In this manner, sales strategies of increasing the amount of service of food or drink menus with high profitability relative to food or drink menus with low profitability and actively recommending such food or drink menus to visitors who eat and drink, for example, can be employed. Consequently, the operating profit of each restaurant shop S can be increased.

In addition, as shown in Table 2, with respect to a plurality of restaurant shops S, information on accounting of food and drink transmitted from the register devices 20 is collected, menus that have been well sold recently and have high contribution to the profits of the restaurant shops S (have high profitability) are selected among similar types of food or drink menus (pasta group), and recommended food or drink menus with expectancy of increase in profit can be selected. Thus, in each restaurant shop S, sales strategies of increasing the amount of service of food or drink menus with high profitability and recommended food or drink menus relative to food or drink menus with low profitability and actively recommending such food or drink menus to visitors who eat and drink, for example, can be employed. Consequently, the operating profit of each restaurant shop S can be further increased. In other words, by utilizing information on accounting of food and drink (e.g., sales data) in the plurality of restaurant shops S, not only a single shop but also restaurant shop business (pasta shop in the above embodiment), a tendency of food or drink menus that have been highly demanded recently can be grasped. Thus, by referring to the result, sales strategies with high accuracy can be employed so that the operating profit can be further increased.

In addition, presentation of additional feedback information such as text and illustration images or photograph images representing sales quantities, unit sales, and sales proceeds expected in the case of servicing a recommended food or drink menu, seats, weathers, and temperature ranges with expectancies of increase in sales of each food or drink menu, and recipes and arrangement examples of the recommended food or drink menu can obtain an opportunity of a further profit increase.

As described above, the embodiment described above is an example for describing the present disclosure, and is not intended to limit the disclosure only to the embodiment. The present disclosure may be variously modified without departing from the gist of the disclosure. For example, those skilled in the art would be able to replace a resource (a hardware resource or a software resource) described in the embodiment with an equivalent, and such replacement is included in the scope of the present disclosure.

Reception and display of feedback information from the server apparatus 10 may be executed in both of the register devices 20 and the user terminal 30 or in either the register devices 20 or the user terminal 30. In addition, the plurality of restaurant shops S may be a plurality of shops belonging to chain shops, or a plurality of individual shops not belonging to any chain shop. A computer constituting the server apparatus 10 is not limited to a host computer, and may be constituted by, for example, a general-purpose communication terminal device. Furthermore, the host computer constituting the server apparatus 10 is not limited to a single computer, and may be constituted by a plurality of sub-computers dispersed on the network N.

Between the server apparatus 10 and each of the register devices 20 and between the server apparatus 10 and the user terminal 30, a gateway server for converting a communication protocol between these devices, for example, may be interposed. Each of the server apparatus 10, the register devices 20, and the user terminal 30 may be a general-purpose communication terminal device. Examples of such devices include a desktop personal computer, a Notebook computer, a tablet personal computer, a laptop personal computer and a cellular phone including a smartphone. More specifically, examples of the cellular phone include a personal digital cellular (PDC), a personal communication system (PCS), a global system for mobile communications (GSM; registered trademark), a personal handy phone system (PHS), and a hand-held portable terminal such as a personal digital assistant (PDA). Examples of a data communication method for these cellular phones include standards including a wideband code division multiple access (W-CDMA), code division multiple access-2000 (CDMA-2000), international mobile telecommunication-2000 (IMT-2000), and wireless broadband internet (Wibro).

The embodiment of the present disclosure is specifically as follows. That is, a business management system according to the present disclosure includes a server apparatus and a register device placed in a restaurant shop. The register device transmits information on accounting of food and drink in the restaurant shop to the server apparatus through a network. The server apparatus calculates a profit of each of food or drink menus from information on the accounting of food and drink and a profit ratio set for each of the food or drink menus, classifies constituent words included in a character string of each of the food or drink menu by a morphological analysis, investigates a food material included in the food or drink menu from the constituent word by using a search system, associates the food material with the food or drink menu, specifies a menu group to which the food or drink menu belongs from the constituent word by using a search system, determines that a food or drink menu with high profit among food or drink menus included in a menu group of an identical or substantially identical type as a food or drink menu with high profitability in the menu group of the identical or substantially identical type, and determines that a food material associated with the food or drink menu with the high profitability is a food material with high profitability in the menu group of the identical or substantially identical type.

The server apparatus may select a food or drink menu including a food material with high profitability in food or drink menus of the menu group of the identical or substantially identical type as a recommended food or drink menu, and transmit information on the recommended food or drink menu to the register device and/or another information terminal device, and the register device and/or another information terminal device may display the recommended food or drink menu.

In addition, the register device may transmit, to the server apparatus, information on an environment of accounting of food and drink. The server apparatus may manage the profit of each of the food or drink menus in association with the information on an environment.

Furthermore, the food material with high profitability in the menu group of the identical or substantially identical type may be, for example, a plurality of types of food materials.

The server apparatus may multiply sales quantity of the entire menu group of the identical or substantially identical type in each restaurant shop by an actual value of a proportion of sales quantities of food or drink menus including the food material included in the recommended food or drink menu with respect to a sales quantity of the entire menu group of the identical or substantially identical type to thereby calculate an sales quantity expected in the case of servicing the recommended food or drink menu in each restaurant shop, and calculate a profit expected in the case of servicing the recommended food or drink menu in each restaurant shop from profit ratios of food or drink menus including the food material included in the recommended food or drink menu.

In addition, the register device may transmit, to the server apparatus, information on visitors who eat and drink. The server apparatus may manage the profit of each of the food or drink menus in association with the information on the visitors who eat and drink.

A control method for a business management system according to the present disclosure is a control method for a business management system including a server apparatus and a register device placed in a restaurant shop. The control method includes: transmitting information on accounting of food and drink in the restaurant shop from the register device to the server apparatus through a network; and causing the server apparatus to calculate, from the information on accounting of food and drink and a profit ratio set for each of food or drink menus, a profit of each of the food or drink menus; classifying a constituent word included in a character string of one of the food or drink menus by a morphological analysis; investigating a food material included in the one of the food or drink menus from the constituent word by using a search system; associating the food material with the one of the food or drink menus; specifying one of the menu groups to which the food or drink menu belongs from the constituent word by using a search system; determining one of the food or drink menus with a high profit among the food or drink menus included in one of the menu groups of an identical or substantially identical type as a food or drink menu with high profitability in the menu group of the identical or substantially identical type; and determining a food material associated with the food or drink menu with the high profitability as a food material with high profitability in the menu group of the identical or substantially identical type.

In addition, a computer program for business management according to the present disclosure is a computer program for business management that causes a computer to function as a server apparatus and a register device placed in a restaurant shop. The computer program causes the register device to transmit information on accounting of food and drink in the restaurant shop to the server apparatus through a network; causes the server apparatus to calculate, from the information on accounting of food and drink and a profit ratio set for each of food or drink menus, a profit of each of the food or drink menus; classifies a constituent word included in a character string of one of the food or drink menu by a morphological analysis; investigates a food material included in the one of the food or drink menus from the constituent word by using a search system; associates the food material with the one of the food or drink menus; specifies one of the menu groups to which the food or drink menu belongs, from the constituent word by using a search system; determines one of the food or drink menus with a high profit among the food or drink menus included in one of the menu groups of an identical or substantially identical type as a food or drink menu with high profitability in the menu groups of the identical or substantially identical type; and determines a food material associated with the food or drink menu with the high profitability is a food material with high profitability in the menu groups of the identical or substantially identical type.

### Industrial Applicability

According to the present disclosure, sales strategies of increasing the amount of service of food or drink menus with high profitability and actively recommending such food or drink menus to visitors who eat and drink can be employed. Consequently, an operating profit can be increased. Thus, the present disclosure can be widely and effectively used for business management in the field of providing food and drink service.

### Reference Signs List

- 10: server apparatus

- 11: processor
- 12: communication interface
- 13: memory resource
- 14: control module
- 15: image module
- 16: communication module
- 17: image module
- 20: register device
- 21: processor
- 22: memory resource
- 23: audio output device
- 24: communication interface
- 25: input device
- 26: display device
- 27: camera
- 30: user terminal (another information terminal device)
- 31: processor
- 32: memory resource
- 33: audio output device
- 34: communication interface
- 35: input device
- 36: display device
- 37: camera
- 61: recommended food or drink menu
- 62, 63: additional information
- 100: business management system
- N: network
- P10, P20, P30: program
- S: restaurant shop

## Claims

1. A business management system comprising:
a server apparatus; and
a register device placed in a restaurant shop, wherein
the register device transmits information on accounting of food and drink in the restaurant shop to the server apparatus through a network, and
from the information on accounting of food and drink and a profit ratio set for each of food or drink menus, the server apparatus calculates a profit of each of the food or drink menus and a profit of the restaurant shop.

2. The business management system according to claim 1, wherein
the server apparatus calculates the profit of each of the food or drink menus in association with a word included in a name of each of the food or drink menus.

3. The business management system according to claim 1, wherein
the server apparatus classifies the food or drink menus into menu groups each belonging to an identical or substantially identical type, based on first words that are common, have identical or substantially identical meaning, or have an identical or substantially identical concept, and
the server apparatus extracts or selects information on a food material making a relatively high contribution to each of the menu groups, from second words used in combination with the first words and the profit of each of the food or drink menus.

4. The business management system according to claim 3, wherein
the server apparatus transmits, to the register device and/or another information terminal device, the extracted or selected information on the food material and/or information on a recommended food or drink menu using the food material, and
the register device and/or the another information terminal device displays the information on the food material and/or the recommended food or drink menu.

5. The business management system according to claim 1, wherein
the register device transmits information on an environment of the accounting of food and drink to the server apparatus, and
the server apparatus manages the profit of each of the food or drink menus in association with the information on the environment.

6. The business management system according to claim 1, wherein
the register device transmits information on a visitor who eats and drinks to the server apparatus, and
the server apparatus manages the profit of each of the food or drink menus in association with the information on the visitor who eats and drinks.

7. The business management system according to claim 1, wherein
the server apparatus
classifies a constituent word included in a character string of one of the food or drink menus by a morphological analysis, investigates a food material included in the one of the food or drink menus from the constituent word by using a search system, and associates the food material with the one of the food or drink menus,
specifies one of the menu groups to which the food or drink menu belongs, from the constituent word by using a search system, and
determines one of the food or drink menus with a high profit among the food or drink menus included in one of the menu groups of an identical or substantially identical type as a food or drink menu with high profitability in the menu group of the identical or substantially identical type, and determines a food material associated with the food or drink menu with high profitability as a food material with high profitability in the menu group of the identical or substantially identical type.

8. A control method for a business management system including a server apparatus and a register device placed in a restaurant shop, the control method comprising:
causing the register device to transmit information on accounting of food and drink in the restaurant shop to the server apparatus through a network; and
causing the server apparatus to calculate, from the information on accounting of food and drink and a profit ratio set for each of food or drink menus, a profit of each of the food or drink menus and a profit of the restaurant shop.

9. A computer program for business management, the computer program causing a computer to function as a server apparatus and a register device placed in a restaurant shop, wherein the computer program
causes the register device to transmit information on accounting of food and drink in the restaurant shop to the server apparatus through a network, and
causes the server apparatus to calculate, from the information on accounting of food and drink and a profit ratio set for each of food or drink menus, a profit of each of the food or drink menus and a profit of the restaurant shop.
